# EUROPEAN PATENT APPLICATION

(11) **EP 3 138 878 A1**
(43) Date of publication of application: **08.03.2017**
(21) Application number: 15785533.9
(22) Date of filing: 27.04.2015
(51) Int. Cl.: C08L 77/06, C08K 5/053, C08K 5/29, C08K 7/02

(54) **SEMI-AROMATIC POLYAMIDE RESIN COMPOSITION AND MOLDED ARTICLE OBTAINED BY MOLDING SAME**

(30) Priority: 30.04.2014 JP 2014093371
(71) Applicant: UNITIKA LTD., Amagasaki-shi Hyogo 660-0824 (JP)
(72) Inventor: TAKETANI, Yutaka, Kyoto 611-0021 (JP); MII, Junichi, Kyoto 611-0021 (JP); AMARI, Taiyo, Kyoto 611-0021 (JP); KAMIKAWA, Hiroo, Kyoto 611-0021 (JP); KABASHIMA, Yohei, Kyoto 611-0021 (JP)
(74) Representative: Vigand, Philippe
(86) International application number: PCT/JP2015/062652
(87) International publication number: WO 2015/166896

(57) **Abstract**

Disclosed is a semi-aromatic polyamide resin composition including 100 parts by mass of a semi-aromatic polyamide (A), 20 to 110 parts by mass of a fibrous reinforcing material (B) and 0.1 to 5 parts by mass of an azine dye (C), wherein the semi-aromatic polyamide (A) includes as the constituent components thereof an aromatic dicarboxylic acid component, an aliphatic diamine component and a monocarboxylic acid component, and has a melting point of 300°C or higher; and the monocarboxylic acid component constituting the semi-aromatic polyamide (A) is an aliphatic monocarboxylic acid having a molecular weight of 200 or more.

## Description

### Technical Field

The present invention relates to a semi-aromatic polyamide resin composition excellent in surface exterior appearance, heat resistance, fluidity, heat aging resistance, mechanical properties, forming processability, and at the same time, improved in retention stability during melt processing.

### Background Art

Semi-aromatic polyamides are excellent in heat resistance and mechanical properties, and accordingly are widely used as forming materials. Among semi-aromatic polyamides, semi-aromatic polyamides having a melting point of 300°C or higher, high heat resistance and heat aging resistance are used in applications highly demanding heat resistance such as applications to engine peripheries of vehicles, LED illumination and the like.

As is known, when a certain amount or more of a fibrous reinforcing material is used in combination with a semi-aromatic polyamide, the semi-aromatic polyamide is degraded in the fluidity during molding, and the obtained formed article is poor in surface exterior appearance. As a method for improving the surface exterior appearance of a polyamide resin, there has been known a method in which an azine dye is mixed with the polyamide resin. For example, Patent Literature 1 discloses a semi-aromatic polyamide resin composition prepared by adding to a semi-aromatic polyamide an azine dye, a glass fiber, an inorganic filler, carbon black and a copper compound. In addition, Patent Literature 2 discloses a polyamide composition prepared by additionally melt kneading nigrosine as an azine dye, with a mixture prepared by melt kneading a semi-aromatic polyamide and a modified resin obtained by modifying with an unsaturated compound.

### Citation List

### Patent Literature

Patent Literature 1: JP2002-97363A
Patent Literature 2: JP2010-209247A

### Summary of Invention

### Technical Problem

However, when the composition of Patent Literature 1 or 2 is applied to a semi-aromatic polyamide having a melting point of 300°C or higher, such a semi-aromatic polyamide is sometimes thermally decomposed during melt processing to degrade the physical properties thereof, and thus has a problem with respect to the so-called retention stability.

The present invention solves the above-described problems, and an object of the present invention is to provide a semi-aromatic polyamide resin composition being excellent in heat resistance, heat aging resistance, mechanical properties and surface exterior appearance, and at the same time, being improved in the retention stability during melt processing.

### Solution to Problem

The present inventors performed a continuous diligent study in order to solve the foregoing technical problem, and consequently have reached the present invention by discovering that the foregoing technical problem can be solved by using an aliphatic monocarboxylic acid having a specific molecular weight, as the monocarboxylic acid component constituting the semi-aromatic polyamide, in the semi-aromatic polyamide resin composition containing a semi-aromatic polyamide, a fibrous reinforcing material and an azine dye.

Specifically, the gist of the present invention is as follows.
(1) A semi-aromatic polyamide resin composition including 100 parts by mass of a semi-aromatic polyamide (A), 20 to 110 parts by mass of a fibrous reinforcing material (B) and 0.1 to 5 parts by mass of an azine dye (C),
   wherein the semi-aromatic polyamide (A) includes as the constituent components thereof an aromatic dicarboxylic acid component, an aliphatic diamine component and a monocarboxylic acid component, and has a melting point of 300°C or higher; and
   the monocarboxylic acid component constituting the semi-aromatic polyamide (A) is an aliphatic monocarboxylic acid having a molecular weight of 200 or more.
(2) The semi-aromatic polyamide resin composition according to (1), including 0.05 to 10 parts by mass of a polyhydric alcohol (D).
(3) The semi-aromatic polyamide resin composition according to (1) or (2), including 1 to 50 parts by mass of a polyamide (E) other than the semi-aromatic polyamide (A).
(4) A formed article obtained by forming the semi-aromatic polyamide resin composition according to any one of (1) to (3).

### Advantageous Effects of Invention

According to the present invention, it is possible to provide a semi-aromatic polyamide resin composition being excellent in surface exterior appearance, heat resistance, heat aging resistance, mechanical properties and forming processability, and at the same time, being improved in the retention stability during melt processing.

### Description of Embodiments

Hereinafter, the present invention is described in detail.

The semi-aromatic polyamide resin composition of the present invention includes a semi-aromatic polyamide (A), a fibrous reinforcing material (B) and an azine dye (C).

The semi-aromatic polyamide (A) in the present invention includes as the constituent components thereof an aromatic dicarboxylic acid component, an aliphatic diamine component and a monocarboxylic acid component.

The aromatic dicarboxylic acid component is preferably mainly composed of terephthalic acid, from the viewpoint of the retention stability during melt processing and the heat resistance of the semi-aromatic polyamide (A). The content of terephthalic acid in the aromatic dicarboxylic acid component is preferably 95 mol% or more and more preferably 97 mol% or more.
Examples of the dicarboxylic acid other than terephthalic acid include: phthalic acid, isophthalic acid and naphthalene dicarboxylic acid.

As long as the object of the present invention is not impaired, as the dicarboxylic acid component of the semi-aromatic polyamide (A), the semi-aromatic polyamide (A) may include: aliphatic dicarboxylic acids such as oxalic acid, malonic acid, succinic acid, glutaric acid, adipic acid, pimelic acid, suberic acid, azelaic acid, sebacic acid, undecanedioic acid and dodecanedioic acid; and alicyclic dicarboxylic acids such as cyclohexane dicarboxylic acid.

From the viewpoint of the retention stability during melt processing and the heat resistance of the semi-aromatic polyamide (A), the aliphatic diamine component is preferably mainly composed of an aliphatic diamine having 7 to 11 carbon atoms, more preferably mainly composed of 1,8-octanediamine or 1,10-decanediamine, and furthermore preferably mainly composed of 1,10-decanediamine because of being satisfactory in the balance between the melt processability and the heat resistance. Examples of the diamine other than the foregoing aliphatic diamines include alicyclic diamines such as cyclohexane diamine.

As long as the object of the present invention is not impaired, as the diamine component of the semi-aromatic polyamide (A), the semi-aromatic polyamide (A) may include aromatic diamines such as xylylenediamine and phenylenediamine.

The monocarboxylic acid component is required to be an aliphatic monocarboxylic acid having a molecular weight of 200 or more, and the molecular weight of the monocarboxylic acid component is preferably 250 or more. When the molecular weight of the aliphatic monocarboxylic acid is less than 200, the semi-aromatic polyamide (A) is not improved in the retention stability during melt processing.

The content of the aliphatic monocarboxylic acid component having a molecular weight of 200 or more is preferably 0.3 to 4.0 mol%, more preferably 0.3 to 3.0 mol%, furthermore preferably 0.3 to 2.5 mol% and particularly preferably 0.8 to 2.5 mol%, in relation to the whole monomer components constituting the semi-aromatic polyamide (A). The content of the aliphatic monocarboxylic acid component falling within the range from 0.3 to 4.0 mol% improves the fluidity, during melt processing, of the semi-aromatic polyamide (A), accordingly the resin composition is improved in the mold transferability at the time of molding, and consequently the surface exterior appearance of the formed article is improved and the demolding property of the formed article is also improved.

Examples of the aliphatic monocarboxylic acid having a molecular weight of 200 or more include lauric acid, myristic acid, palmitic acid, stearic acid and behenic acid. Among these, stearic acid is preferable because of being high in versatility. The foregoing aliphatic monocarboxylic acid components may be used each alone or in combinations of two or more thereof. An aliphatic monocarboxylic acid having a molecular weight of 200 or more and an aliphatic monocarboxylic acid having a molecular weight of less than 200 may also be used in combination. In the present invention, the molecular weight of an aliphatic monocarboxylic acid means the molecular weight of the aliphatic monocarboxylic acid as a raw material.

As long as the object of the present invention is not impaired, the semi-aromatic polyamide (A) in the present invention may also include as the constituent component thereof a lactam such as caprolactam or laurolactam, or a ω-aminocarboxylic acid such as aminocaproic acid or 11-aminoundecanoic acid.

The semi-aromatic polyamide (A) in the present invention is required to have a melting point (hereinafter, abbreviated as "Tm" in some cases) of 300°C or higher, and the melting point thereof is preferably 310 to 350°C. When Tm of the semi-aromatic polyamide (A) is lower than 300°C, the obtained formed article is low in heat resistance. On the other hand, when Tm of the semi-aromatic polyamide (A) exceeds 350°C, the melt processing temperature exceeds the decomposition temperature of the amide bond (approximately 350°C), and sometimes the melt processing comes to be difficult. It is to be noted that Tm is defined as the temperature at the top of the endothermic peak observed when the temperature is increased at a temperature increase rate of 20°C/min by using a differential scanning calorimeter (DSC).

In the semi-aromatic polyamide (A) of the present invention, the relative viscosity as measured in 96% sulfuric acid, at 25°C and at a concentration of 1 g/dL is preferably 1.8 or more, more preferably 1.8 to 3.5 and furthermore preferably 1.9 to 3.1. When the relative viscosity is less than 1.8, the obtained formed article is sometimes degraded in mechanical properties.

The semi-aromatic polyamide (A) in the present invention can be produced by using a hitherto known method such as a heat polymerization method or a solution polymerization method. Among these methods, the heat polymerization method is preferable because of being industrially advantageous. Examples of the heat polymerization method include a method including a step (i) of obtaining a reaction product from an aromatic dicarboxylic acid component, an aliphatic diamine component and a monocarboxylic acid component, and a step (ii) of polymerizing the obtained reaction product.

Examples of the step (i) include a method in which an aromatic dicarboxylic acid powder and the monocarboxylic acid are mixed with each other, the resulting mixture is beforehand heated to a temperature equal to or higher than the melting point of the aliphatic diamine and equal to or lower than the melting point of the aromatic dicarboxylic acid, and the aliphatic diamine is added to the aromatic dicarboxylic acid powder and the monocarboxylic acid at this temperature in such a way that substantially no water is allowed to be contained so as for the powder state of the aromatic dicarboxylic acid to be maintained. Alternatively, examples of the step (i) include another method in which a suspension liquid composed of the aliphatic diamine in a molten state and a monocarboxylic acid in a molten state, and the solid aromatic dicarboxylic acid is stirred for mixing to obtain a liquid mixture, then at a temperature lower than the melting point of the finally produced semi-aromatic polyamide, the salt production reaction based on the reaction between the aromatic dicarboxylic acid, the aliphatic diamine and the monocarboxylic acid and the production reaction of the low polymeric substance based on the polymerization of the produced salt are performed, and thus a mixture composed of the salt and the low polymeric substance is obtained. In this case, crushing may be performed while the reaction is being allowed to proceed, or alternatively, crushing may be performed after the mixture is once taken out after the reaction. As the step (i), the former method easy in controlling the shape of the reaction product is preferable.

Examples of the step (ii) include a method in which the reaction product obtained in the step (i) is subjected to a solid phase polymerization at a temperature lower than the melting point of the finally produced semi-aromatic polyamide, and thus the molecular weight is increased to a predetermined molecular weight so as to be a high molecular weight to yield the semi-aromatic polyamide. The solid phase polymerization is preferably performed at a polymerization temperature of 180 to 270°C, with a reaction time of 0.5 to 10 hours, in a flow of inert gas such as nitrogen.

The reaction apparatuses for the step (i) and the step (ii) are not particularly limited, and heretofore known apparatuses may be used as such reaction apparatuses. The step (i) and the step (ii) may be performed with the same apparatus, or with different apparatuses.

The heating method in the heating polymerization method is not particularly limited; examples of the heating method include: a method in which the reaction vessel is heated with a medium such as water, vapor or a heat transfer oil; a method in which the reaction vessel is heated with an electric heater; and a method in which utilized is the frictional heat provided by the motion of the content, such as the heat of stirring generated by stirring. These heating methods may also be combined.

In the production of the semi-aromatic polyamide (A), a polymerization catalyst may be used in order to increase the polymerization efficiency. Examples of the polymerization catalyst include phosphoric acid, phosphorous acid and hypophosphorous acid or the salts of these acids. Usually, the addition amount of the polymerization catalyst is preferably 2 mol% or less in relation to the total number of moles of the raw material monomers.

Examples of the fibrous reinforcing material (B) constituting the semi-aromatic polyamide resin composition of the present invention include, without being particularly limited to: glass fiber, carbon fiber, boron fiber, polyvinyl alcohol fiber, polyester fiber, acrylic fiber, wholly aromatic polyamide fiber, polybenzoxazole fiber, polytetrafluoroethylene fiber, kenaf fiber, bamboo fiber, hemp fiber, bagasse fiber, high strength polyethylene fiber, alumina fiber, silicon carbide fiber, potassium titanate fiber, brass fiber, stainless steel fiber, steel fiber, ceramic fiber and basalt fiber. Among these, glass fiber and carbon fiber are preferable because of being high in the improvement effect of mechanical properties, having heat resistance capable of withstanding the heating temperature during melt kneading with the semi-aromatic polyamide (A), and being easily available. The foregoing fibrous reinforcing materials (B) may be used each alone or in combinations of two or more thereof.

Glass fiber and carbon fiber are preferably surface treated with a sizing agent. The main component of the sizing agent is preferably a coating film forming agent or a coupling agent.

Examples of the coating film forming agent include a urethane resin, an epoxy resin and an acrylic resin; among these, a urethane resin is preferable because of being high in the adhesion effect with glass fiber or carbon fiber, and excellent in heat resistance. The coating film forming agent preferably contains an acid component because the acid component improves the retention stability of the resin composition. The acid component is preferably copolymerized with the resin that is the main component of the coating film forming agent. Examples of the acid component include: anhydrides such as maleic anhydride; unsaturated monocarboxylic acids such as acrylic acid, methacrylic acid and cinnamic acid; and unsaturated dicarboxylic acids such as maleic acid, fumaric acid and itaconic acid.

Examples of the coupling agent include coupling agents such as vinylsilane-based, acrylic silane-based, epoxysilane-based, aminosilane-based and aminotitanium-based coupling agents; among these, the aminosilane-based coupling agent is preferable because of being high in the adhesion effect between the semi-aromatic polyamide (A) and glass fiber or carbon fiber, and excellent in heat resistance.

The fiber length of the fibrous reinforcing material (B) is not particularly limited, but is preferably 0.1 to 7 mm and more preferably 0.5 to 6 mm. The fiber length of the fibrous reinforcing material (B) set to be 0.1 to 7 mm allows the resin composition to be reinforced without exerting any adverse effect on the formability. The fiber diameter of the fibrous reinforcing material (B) is not particularly limited, but is preferably 3 to 20 µm and more preferably 5 to 13 µm. The fiber diameter of the fibrous reinforcing material (B) set to be 3 to 20 µm allows the resin composition to be reinforced without causing fiber breakage during melt kneading. Examples of the cross-sectional shape of the fibrous reinforcing material (B) include a circle, a rectangle, an ellipse, and other cross-sectional shapes; among these, a circle is preferable.

The content of the fibrous reinforcing material (B) in the semi-aromatic polyamide resin composition is required to be 20 to 110 parts by mass, and is preferably 30 to 110 parts by mass and more preferably 50 to 110 parts by mass, in relation to 100 parts by mass of the semi-aromatic polyamide (A).

When the content of the fibrous reinforcing material (B) is less than 20 parts by mass, the obtained formed article is satisfactory in the surface exterior appearance, but the improvement effect of mechanical properties is small.

On the other hand, when the content of the fibrous reinforcing material (B) exceeds 110 parts by mass, in the obtained formed article, the fibrous reinforcing material (B) comes up to the surface thereof to degrade the surface exterior appearance thereof, and the improvement effect of the mechanical properties thereof is saturated and no further improvement effect can be expected. Also, when the content of the fibrous reinforcing material (B) exceeds 110 parts by mass, the workability during melt kneading is degraded, and it is difficult to obtain the pellet of the semi-aromatic polyamide resin composition. In addition, because the fluidity of the resin composition is impaired to a large extent, for example, the situation comes to be such that the resin temperature is sometimes increased by shear heating during melt processing, or the resin temperature has to be increased in order to improve the fluidity, to result in the decrease of the molecular weight or the degradation of the mechanical properties of the semi-aromatic polyamide.

The azine dye (C) constituting the semi-aromatic polyamide resin composition of the present invention is the generic name for the dye having a six-atom heterocycle in which the number of the hetero atoms present in the ring is two or more, and at least one of the hetero atom is a nitrogen atom. As the azine dye, such nigrosine compounds as described in the COLOR INDEX as C.I.SOLVENT BLACK 5 and C.I.SOLVENT BLACK 7 are preferable. A nigrosine compound can be produced by adding hydrochloric acid to aniline or aniline hydrochloride and nitrobenzene, and by subjecting the resulting mixture to dehydration, deammoniation, and oxidation-reduction condensation reaction, in the presence of a catalyst such as copper or iron.

Examples of the commercially available azine dyes include: NUBIAN BLACK NH-805, NUBIAN BLACK NH-815, NUBIAN BLACK TN-870, NUBIAN BLACK TH-807 and NUBIAN BLACK TH-827 manufactured by Orient Chemical Industries Co., Ltd.; and Spirit Black MB, Spirit Black CA, Nigrosine Base Black S, Nigrosine Base Black SF, Nigrosine Base Black 109 manufactured by Chuo synthetic Chemical Co., Ltd.

The content of the azine dye (C) in the semi-aromatic polyamide resin composition is required to be 0.1 to 5 parts by mass, and is preferably 0.3 to 4 parts by mass and more preferably 0.5 to 3 parts by mass, in relation to 100 parts by mass of the semi-aromatic polyamide (A). When the content of the azine dye (C) is less than 0.1 part by mass, it is impossible to improve the exterior appearance of the obtained formed article. On the other hand, when the content of the azine dye (C) exceeds 5 parts by mass, the obtained formed article is insufficient in mechanical properties. When the content of the azine dye (C) is 0.1 to 5 parts by mass, in addition to the improvement of the surface exterior appearance of the obtained formed article, the solidification of the resin composition is slow in the mold during molding to extend the time until gate seal and to allow sufficient holding pressure to be applied, and hence the shrinkage magnitude of the obtained formed article can also be reduced.

The semi-aromatic polyamide resin composition of the present invention may further include a polyhydric alcohol (D).

The polyhydric alcohol (D) is a compound containing two or more hydroxyl groups. Examples of the polyhydric alcohol (D) include: saturated aliphatic compounds, unsaturated aliphatic compounds, alicyclic compounds, aromatic compounds and saccharides. The polyhydric alcohol (D) may contain one or a plurality of hetero atoms such as oxygen, nitrogen and/or sulfur atoms. The polyhydric alcohol (D) may contain a substituent other than the hydroxyl group such as an ether, carboxylic acid, amide or ester group. In addition, the polyhydric alcohol may be a low molecular weight compound or a polymer-type high molecular weight compound in which a certain monomer unit is repeated. The polyhydric alcohols (D) may be used each alone or in combinations of a plurality of types.

Examples of the saturated aliphatic compound include: dihydric low molecular weight alcohols such as ethylene glycol, diethylene glycol, triethylene glycol, 1,4-butanediol, 1,5-pentanediol, 2,2-dimethyl-1,3-propanediol and glycerin monomethacrylate; trihydric low molecular weight alcohols such as glycerol, trimethylol propane, hexane-1,2,6-triol, 1,1,1-tris-(hydroxymethyl)ethane, 3-(2'-hydroxyethoxy)-propane-1,2-diol, 3-(2'-hydroxypropoxy)-propane-1,2-diol, 2-(2'-hydroxyethoxy)-hexane-1,2-diol, 6-(2'-hydroxypropoxy)-hexane-1,2-diol, 1,1,1-tris-[(2'-hydroxyethoxy)-methyl]-ethane, 1,1,1-tris-[(2'-hydroxypropoxy)-methyl]-propane, trimethylolpropane ethoxylate and trimethylolpropane propoxylate; tetra- or higher hydric low molecular weight alcohols such as di-trimethylolpropane, pentaerythritol, dipentaerythritol and tripentaerythritol; and high molecular weight polyhydric alcohols such as polyethylene glycol, polyglycerin, polyvinyl alcohol, ethylene-vinyl alcohol copolymerization resin, polyvinyl butyral (such as Mowital, manufactured by Kuraray Co., Ltd.), both-end hydroxyl group-terminated hydrogenated polybutadiene (such as GI Series, manufactured by Nippon Soda Co., Ltd.), both-end hydroxyl group-terminated polybutadiene (such as G Series, manufactured by Nippon Soda Co., Ltd.), dendritic polyalcohol (such as Boltorn, manufactured by Perstorp Corp.) and polycaprolactone polyol (such as PLACCEL 200 Series, 300 Series and 400 Series, manufactured by Daicel Corp.).

Examples of the unsaturated aliphatic compound include ricinoleyl alcohol.

Examples of the alicyclic compound include 1,2-cyclohexanediol, 1,3-cyclohexanediol, 1,4-cyclohexanediol, 1,3,5-cyclohexanetriol and 2,3-di-(2'-hydroxyethyl)-cyclohexan-1-ol.

Examples of the aromatic compound include: 1,2-benzenedimethanol, 1,3-benzenedimethanol, 1,4-benzenedimethanol, hydrobenzoin, 1,1,2,2-tetraphenylethane-1,2-diol, 1,1,1-tris-(4'-hydroxyphenyl)-ethane, 1,1,1-tris-(hydroxyphenyl)-propane, 1,1,3-tris-(dihydroxy-3-methylphenyl)-propane, 1,1,4-tris-(dihydroxyphenyl)-butane, 1,1,5-tris-(hydroxyphenyl)-3-methylpentane and bisphenoxyethanol fluorene.

Examples of the saccharides include: cyclodextrin, D-mannose, glucose, galactose, sucrose, fructose, xylose, arabinose, D-mannitol, D-sorbitol, D- or L-arabitol, xylitol, iditol, galactitol, talitol, allitol, altritol, guilitol, erythritol, threitol, ribitol, D-gulonic acid-γ-lactone.

Examples of the polyhydric alcohol having two or more hydroxyl groups, and at the same time, having an ester group as a substituent other than the hydroxyl group include: esters formed of pentaerythritol and fatty acids (such as Unister H-Series, manufactured by NOF Corp.), and esters formed of dipentaerythritol and dibasic acids (such as PLENLIZER Series, manufactured by Ajinomoto Fine-Techno Co., Ltd.).

When the semi-aromatic polyamide resin composition includes the polyhydric alcohol (D), the content of the polyhydric alcohol (D) is preferably 0.05 to 10 parts by mass, more preferably 0.1 to 8 parts by mass and furthermore preferably 0.2 to 5 parts by mass, in relation to 100 parts by mass of the semi-aromatic polyamide (A). The content of the polyhydric alcohol (D) set to be 0.05 to 10 parts by mass allows the heat aging resistance of the formed article to be improved. The inclusion of the polyhydric alcohol (D) enhances the fluidity during melt processing, and improves the surface exterior appearance of the obtained formed article. Moreover, the combinational use of the azine dye (C) and the polyhydric alcohol (D) each in a specific amount facilitates the effective application of the holding pressure even to the flow end during molding, and thus drastically reduces the shrinkage magnitude of the obtained formed article.

The semi-aromatic polyamide resin composition of the present invention may further include a polyamide (E) other than the semi-aromatic polyamide (A).

Examples of the polyamide (E) other than the semi-aromatic polyamide (A) (hereinafter, abbreviated as "the other polyamide (E) in some cases) include a semi-aromatic polyamide, an aliphatic polyamide and an alicyclic polyamide.

Examples of the semi-aromatic polyamide other than the semi-aromatic polyamide (A) include semi-aromatic polyamides being amorphous or having a melting point of lower than 300°C, and such a semi-aromatic polyamide can be exemplified by a copolymer of terephthalic acid, isophthalic acid and an aliphatic diamine.

Examples of the aliphatic polyamide other than the semi-aromatic polyamide (A) include: polyamide 6, polyamide 11, polyamide 12, polyamide 46, polyamide 410, polyamide 412, polyamide 510, polyamide 512, polyamide 66, polyamide 610, polyamide 612, polyamide 1010, polyamide 1012, polyamide 6/66, polyamide 66/1010 and polyamide 66/612.

Examples of the alicyclic polyamide other than semi-aromatic polyamide (A) include: polyamide 2Me5C, polyamide 6C, polyamide 8C, polyamide 9C, polyamide 10C and polyamide 12C. Here, C means 1,4-cyclohexanedicarboxylic acid, and 2Me5 means 2-methylpentamethylenediamine.

When the semi-aromatic polyamide resin composition includes the other polyamide (E), the content of the other polyamide (E) is preferably 1 to 50 parts by mass, more preferably 3 to 50 parts by mass and furthermore preferably 3 to 30 parts by mass, in relation to 100 parts by mass of the semi-aromatic polyamide (A). The content of the other polyamide (E) set to be 1 to 50 parts by mass slows the solidification of the semi-aromatic polyamide (A) in the mold, thus allows the surface exterior appearance of the formed article to be improved, or the forming failure such as shrinkage of the formed article to be improved, and also allows the degradation of the weld strength, found in a semi-aromatic polyamide formed article including a certain amount or more of a fibrous reinforcing material to be suppressed.

The semi-aromatic polyamide resin composition of the present invention may further include an antioxidant (F), or a stabilizer such as a light stabilizer or a heat stabilizer.

Examples of the antioxidant (F) include: hindered phenol antioxidants, sulfur-based antioxidants and phosphorus-based antioxidants.

Examples of the hindered phenol antioxidant include: n-octadecyl-3-(3',5'-di-t-butyl-4'-hydroxyphenyl)-propionate, n-octadecyl-3-(3'-methyl-5'-t-butyl-4'-hydroxyphenyl)-propionate, n-tetradecyl-3-(3',5'-di-t-butyl-4'-hydroxyphenyl)-propionate, 1,6-hexanediol-bis-[3-(3,5-di-t-butyl-4-hydroxyphenyl)-propionate], 1,4-butanediol-bis-[3-(3,5-di-t-butyl-4-hydroxyphenyl)-propionate], 2,2'-methylenebis-(4-methyl-t-butylphenol), triethylene glycol-bis-[3-(3-t-butyl-5-methyl-4-hydroxyphenyl)-propionate], tetrakis[methylene-3-(3',5'-di-t-butyl-4'-hydroxyphenyl)propionate]methane, 3,9-bis[2-{3-(3-t-butyl-4-hydroxy-5-methylphenyl)propionyloxy}-1,1-dimethylethyl]-2,4,8,10-tetraoxaspiro(5,5)undecane, N,N'-bis-3-(3',5'-di-t-butyl-4'-hydroxyphenyl)propionylhexamethylenediamine, N,N'-tetramethylene-bis-3-(3'-methyl-5'-t-butyl-4'-hydroxyphenol)propionyldiamine, N,N'-bis-[3-(3,5-di-t-butyl-4-hydroxyphenol)propionyl]hydrazine, N-salicyloyl-N'-salicylidenehydrazine, 3-(N-salicyloyl)amino-1,2,4-triazole, N,N'-bis[2-{3-(3,5-di-t-butyl-4-hydroxyphenyl)propionyloxy}ethyl]oxamide, pentaerithrityl-tetrakis[3-(3,5-di-t-butyl-4-hydroxyphenyl)propionate] and N,N'-hexamethylenebis-(3,5-di-t-butyl-4-hydroxy-hydrocinnamide).

Preferable among these are: triethylene glycol-bis-[3-(3-t-butyl-5-methyl-4-hydroxyphenyl)-propionate], tetrakis[methylene-3-(3',5'-di-t-butyl-4'-hydroxyphenyl)propionate]methane, 1,6-hexanediol-bis-[3-(3,5-di-t-butyl-4-hydroxyphenyl)-propionate], pentaerithrityl-tetrakis[3-(3,5-di-t-butyl-4-hydroxyphenyl)propionate] and N,N'-hexamethylenebis-(3,5-di-t-butyl-4-hydroxy-hydrocinnamide). The foregoing hindered phenol antioxidants may be used each alone or in combinations of two or more thereof.

Examples of the commercially available hindered phenol antioxidants include: Adeka Stab AO-20, AO-30, AO-40, AO-50, AO-60, AO-70, AO-80 and AO-330 manufactured by Adeka Corp.; Irganox 245, 259, 565, 1010, 1035, 1076, 1098, 1222, 1330, 1425, 1520, 3114 and 5057 manufactured by Ciba Specialty Chemicals Inc.; Sumilizer BHT-R, MDP-S, BBM-S, WX-R, NW, BP-76, BP-101, GA-80, GM and GS manufactured by Sumitomo Chemical Industry Co., Ltd.; and Cyanox CY-1790 manufactured by Cyanamide Co.

Examples of the sulfur-based antioxidant include: distearyl 3,3'-thiodipropionate, pentaerithrityl tetrakis(3-laurylthiopropionate), 2-mercaptobenzimidazole, didodecyl 3,3'-thiodipropionate, dioctadecyl 3,3'-thiodipropionate, ditridecyl 3,4'-thiodipropionate and 2,2-bis[[3-(dodecylthio)-1-oxopropoxy]methyl]-1,3-propanediyl ester. Among these preferable are: distearyl 3,3'-thiodipropionate and pentaerithrityl tetrakis(3-laurylthiopropionate). The foregoing sulfur-based antioxidants may be used each alone or in combinations of two or more thereof. Examples of the commercially available sulfur-based antioxidant include: Sumilizer TP-D manufactured by Sumitomo Chemical Industry Co., Ltd.

The phosphorus-based antioxidant may be either an inorganic compound or an organic compound. Examples of the phosphorus-based antioxidant include: inorganic phosphoric acid salts such as monosodium phosphate, disodium phosphate, trisodium phosphate, sodium phosphite, calcium phosphite, magnesium phosphite and manganese phosphite; and organophosphorus compounds such as triphenyl phosphite, trioctadecyl phosphite, tridecyl phosphite, trinonylphenyl phosphite, diphenyl isodecyl phosphite, bis(2,6-di-tert-butyl-4-methylphenyl)pentaerythritol diphosphite, bis(2,4-di-tert-butylphenyl)pentaerythritol diphosphite, tris(2,4-di-tert-butylphenyl)phosphite, distearyl pentaerythritol diphosphite, bis(nonylphenyl)pentaerythritol diphosphite, 1,1'-biphenyl-4,4'-diylbis[bis(2,4-di-tert-butylphenyl)phosphonite], tetrakis(2,4-di-tert-butylphenyl)-4,4'-biphenylene diphosphonite, tetra(tridecyl)-4,4'-isopropylidenediphenyl diphosphite and 2,2-methylenebis(4,6-di-tert-butylphenyl)octyl phosphite. The foregoing phosphorus-based antioxidants may be used each alone or in combinations of two or more thereof. Examples of the commercially available phosphorus-based antioxidant include: Adeka Stab PEP-8, PEP-36, PEP-4C and PEP-24G manufactured by Adeka Corp.; and Hostanox P-EPQ manufactured by Clariant Inc.

Examples of the light stabilizer include hindered amine light stabilizers. Examples of the hindered amine light stabilizer include: tetrakis(1,2,2,6,6-pentamethyl-4-piperidyl)butane-1,2,3,4-tetracarboxylate, tetrakis(2,2,6,6-tetramethyl-1-4-piperidyl)butane-1,2,3,4-tetracarboxylate, dimethyl succinate·1-(2-hydroxyethyl)-4-hydroxy-2,2,6,6-tetramethyl-4-piperidine polycondensate, bis(1,2,2,6,6-pentamethyl-4-piperidyl) sebacate and poly[(6-morpholino-S-triazine-2,4-diyl)(2,2,6,6-tetramethyl-4-piperidyl)imino]-hexamethylene [(2,2,6,6-tetramethyl-4-piperidyl)imino]. The foregoing hindered amine light stabilizers may be used each alone or in combinations of two or more thereof. Examples of the commercially available hindered amine light stabilizer include: Nylostab S-EED manufactured by Clariant Japan K.K., Biosorb 04 manufactured by Kyodo Chemical Co., Ltd., Cyasorb UV-3346 manufactured by Cytec Inc., Adeka Stab LA-57, LA-63P and LA-68 manufactured by Adeka Corp., and Chimassorb 119 and 944 and Tinuvin 622 and 765 manufactured by BASF Inc.

Examples of the heat stabilizer include copper compounds. Examples of the copper compound include: copper chloride, copper bromide, copper fluoride, copper iodide, copper thiocyanate, copper nitrate, copper acetate, copper naphthenate, copper caprate, copper laurate, copper stearate, copper acetylacetonate and copper oxide. The copper compounds are preferably used in combination with iodine compounds. Examples of the iodine compound include: potassium iodide, magnesium iodide and ammonium iodide.

When the semi-aromatic polyamide resin composition includes a stabilizer such as the antioxidant (F), the content of such a stabilizer is preferably 0.005 to 3 parts by mass and more preferably 0.1 to 1 part by mass, in relation to 100 parts by mass of the semi-aromatic polyamide (A). The content of the stabilizer set to be 0.1 to 3 parts by mass allows the heat aging resistance and the retention stability during melt processing to be improved.

To the semi-aromatic polyamide resin composition of the present invention, if necessary, other additives such as a filler, a flame retardant, a colorant, an antistatic agent, an impact resistance improver and a sliding property improver may further be added. Examples of the filler include: talc, a swelling clay mineral, silica, alumina, glass beads and graphite. Examples of the flame retardant include: a bromine-containing flame retardant, a nitrogen-containing flame retardant, a phosphorus-containing flame retardant, a nitrogen-phosphorus-containing flame retardant and a metal hydrate flame retardant. Examples of the colorant include: pigments such as titanium oxide and carbon black. Examples of the antistatic agent include: an anionic antistatic agent, a cationic antistatic agent and a nonionic antistatic agent. Examples of the impact resistance improver include:
(ethylene and/or propylene)·α-olefin copolymer, (ethylene and/or propylene)·(α,β-unsaturated carboxylic acid and/or unsaturated carboxylic acid and/or unsaturated carboxylic acid ester) copolymers, a styrene elastomer and a core-shell type impact resistance improver. Examples of the sliding property improver include: fluororesins such as polytetrafluoroethylene, and silicones such as polydimethylsiloxane and fluorine-modified dimethylsiloxane.

In the present invention, the method for producing the semi-aromatic polyamide resin composition by mixing the semi-aromatic polyamide (A), the fibrous reinforcing material (B), the azine dye (C), and if necessary, the polyhydric alcohol (D), the polyamide (E) other than semi-aromatic polyamide (A), a stabilizer, other additives and the like, is not particularly limited as long as the advantageous effects of the present invention are impaired; however, a melt kneading method is preferable as the method for producing the semi-aromatic polyamide resin composition.

Examples of the melt kneading method include the methods using a batch type kneader such as a Brabender, a Banbury mixer, a Henschel mixer, a helical rotor, a roll, a single screw extruder and a twin screw extruder. The melt kneading temperature is selected from the range in which the semi-aromatic polyamide (A) melts and is not decomposed. When the melt kneading temperature is too high, the semi-aromatic polyamide (A) may be decomposed; accordingly, the melt kneading temperature is preferably (Tm - 20°C) to (Tm + 40°C).

The melt-kneaded resin composition can be processed into various shapes by, for example, a method in which the melt-kneaded resin composition is extruded into a strand shape and processed into a pellet shape; a method in which the melt-kneaded resin composition is hot cut or cut under water into a pellet shape; a method in which the melt-kneaded resin composition is extruded into a sheet shape and subjected to cutting; or a method in which the melt-kneaded resin composition is extruded into a block shape and pulverized into a powder form.

The formed article of the present invention is obtained by forming the semi-aromatic polyamide resin composition. Examples of the method for forming the formed article include an injection molding method, an extrusion molding method, a blow molding method, and a sinter molding method; among these, the injection molding method is preferable because of resulting in significant improvement effects of the mechanical properties and formability.

Examples of the injection molding machine include, without being particularly limited to: a screw in-line type injection molding machine and a plunger type injection molding machine. The semi-aromatic polyamide resin composition heat-melted in the cylinder of an injection molding machine is metered every shot, injected into a mold in a molten state, cooled and solidified in a predetermined shape, and then taken out as a formed article from the mold. The resin temperature during injection molding is preferably set at Tm or higher and more preferably set at a temperature lower than (Tm + 40°C).

When the semi-aromatic polyamide resin composition is melt processed, it is preferable to use a sufficiently dried semi-aromatic polyamide resin composition pellet. When a semi-aromatic polyamide resin composition having a large water content is used, the resin undergoes foaming in the cylinder of the injection molding machine, and accordingly sometimes it is difficult to obtain an optimal formed article. The water content of the semi-aromatic polyamide resin composition pellet used for injection molding is preferably less than 0.3 part by mass and more preferably less than 0.1 part by mass, in relation to 100 parts by mass of the semi-aromatic polyamide resin composition.

The formed article of the present invention can be used in wide ranges of applications such as applications to vehicle components, electric and electronic components, miscellaneous goods and civil engineering and construction components.

Examples of the vehicle components include: thermostat covers, IGBT module components of inverters, insulator members, intercooler members, exhaust finishers, power device enclosures, ECU enclosures, ECU connectors, electrical insulating materials for motors and coils, coating materials for cables and sliding members of the bearings for motors or gears. Examples of the electric and electronic components include: connectors, LED reflectors, switches, sensors, sockets, capacitors, jacks, fuse holders, relays, coil bobbins, breakers, electromagnetic switches, holders, plugs, enclosure components for electrical devices such as portable personal computers, sliding members of the bearings in printers and multifunction printers, resistors, ICs and LED housings.

### Examples

Hereinafter, the present invention is described specifically by way of Examples. However, the present invention is not limited by these Examples.

### 1. Measurement Methods

The measurements of the physical properties of the semi-aromatic polyamide and the semi-aromatic polyamide resin composition were performed by the following methods.

### (1) Relative Viscosity

The relative viscosity was measured by using 96% by mass sulfuric acid as a solvent at a concentration of 1 g/dL, at 25°C.

### (2) Melting Point (Tm)

By using the differential scanning calorimeter DSC-7 (manufactured by Perkin-Elmer Corp.), in a nitrogen atmosphere, a sample was increased in temperature to 370°C at a temperature increase rate of 20°C/min, then the sample was maintained at 370°C for 5 minutes, decreased in temperature to 25°C at a temperature decrease rate of 20°C/min, further maintained at 25°C for 5 minutes, and then again increased in temperature at a temperature increase rate of 20°C/min. The temperature at the top of the endothermic peak was taken as the melting point (Tm).

### (3) Contents of Terminal Groups

The semi-aromatic polyamide resin was subjected to ¹H-NMR analysis by using a high resolution nuclear magnetic resonance apparatus ("ECA500 NMR," manufactured by JEOL Ltd.) under the conditions that the resolution was 500 MHz, deuterated trifluoroacetic acid was used as the solvent and the temperature was set at 25°C, to determine the contents of the carboxylic acid and amine terminal groups.

### (4) Tensile Strength and Tensile Strength Retention Rate

The tensile strength was measured by using each of the specimens 1, 2, 3 and 4 prepared with the below-described method, according to ISO 178. The retention stability was evaluated by determining the tensile strength retention rate (%) of the specimen 2 in relation to the specimen 1, the heat aging resistance was evaluated by determining the tensile strength retention rate (%) of the specimen 3 in relation to the specimen 1, and the strength of the formed article having a weld portion was evaluated by determining the tensile strength retention rate (%) of the specimen 4 in relation to the specimen 1.

### <Specimen 1> (Specimen Prepared under Standard Conditions)

The semi-aromatic polyamide resin composition was injection molded by using the injection molding machine Model S2000i-100B (manufactured by Fanuc Corp.), under the conditions of the cylinder temperature of (Tm + 15°C), the mold temperature of (Tm - 185°C) and the residence time in the cylinder of 10 seconds, to prepare the specimen 1 (ISO multipurpose test specimen).

### <Specimen 2> (Specimen for Evaluation of Retention Stability, Retention Treatment for 600 Seconds)

The semi-aromatic polyamide resin composition was injection molded by using the injection molding machine Model S2000i-100B (manufactured by Fanuc Corp.), under the conditions of the cylinder temperature of (Tm + 15°C), the mold temperature of (Tm - 185°C) and the residence time in the cylinder of 600 seconds, to prepare the specimen 2 (ISO multipurpose test specimen). The residence time in the cylinder was set at 600 seconds by regulating the cooling time.

### <Specimen 3> (Specimen for Evaluation of Heat Aging Resistance, Heat Treatment at 200°C for 1000 hours)

The specimen 1 was heat treated in a hot air furnace at 200°C for 1000 hours to prepare the specimen 3.

### <Specimen 4> (Specimen for Evaluation of Strength of Formed Article having Weld Portion)

The semi-aromatic polyamide resin composition was molded, from both ends with two gates in such a way that a weld portion was created at the center of the formed article, by using the injection molding machine Model S2000i-100B (manufactured by Fanuc Corp.), under the conditions of the cylinder temperature of (Tm + 15°C), the mold temperature of (Tm - 185°C) and the residence time in the cylinder of 10 seconds, to prepare the specimen 4 (ISO multipurpose test specimen) having a weld portion.

### (5) Bar Flow Length

The flow length of the specimen was measured when the semi-aromatic polyamide resin composition was molded by using the injection molding machine Model S2000i-100B (manufactured by Fanuc Corp.), under the conditions of the cylinder temperature of (Tm + 15°C), the mold temperature of (Tm - 185°C), the injection pressure of 150 MPa, the injection time of 8 seconds and the injection speed set at 150 mm/sec; the flow length thus obtained was taken as the bar flow length. As the mold, a bar flow test mold of 0.5 mm in thickness, 20 mm in width and 980 mm in length was used.

### (6) Distortion Temperature under Load

The distortion temperature under load was measured by using the specimen 1, according to ISO 75-1, 2, under a load of 1.8 MPa.

### (7) Surface Exterior Appearance

The surface exterior appearance of the specimen 1 was visually observed, and evaluated on the basis of the following standards.
E(Excellent): The fibrous reinforcing material does not come up to the surface, and the surface is free from roughness.
G(Good): The fibrous reinforcing material is found to come up to the surface, or the surface has roughness. P(Poor): The fibrous reinforcing material comes up to the surface, and the surface has roughness.

### (8) Shrinkage Magnitude

In the specimen prepared by molding in the same manner as in the case of the specimen 1 except that a plate mold of 5 mm in thickness, 127 mm in width and 127 mm in length was used as the mold, the depths of the positions undergoing shrinkage were measured, and the average value of the measured depths was derived and taken as the shrinkage magnitude.

### 2. Raw Materials

The raw materials used in Examples and Comparative Examples are shown below.

### (1) Aromatic Dicarboxylic Acid Components

- TPA: Terephthalic acid
- IPA: Isophthalic acid

### (2) Aliphatic Diamine Components

- ODA: 1,8-Octanediamine
- NDA: 1,9-Nonanediamine
- DDA: 1,10-Decanediamine

### (3) Monocarboxylic Acids

- STA: Stearic acid (molecular weight: 284)
- MYA: Myristic acid (molecular weight: 228)
- CAA: Capric acid (molecular weight: 172)
- BA: Benzoic acid (molecular weight: 122)

### (4) Fibrous Reinforcing Materials

- B-1: Glass fiber (T-262H, average fiber diameter: 10.5 µm, average fiber length: 3 mm, coating film forming agent: acid copolymer type, manufactured by Nippon Electric Glass Co., Ltd.)
- B-2: Carbon fiber (HTA-C6-NR, average fiber diameter: 7 µm, average fiber length: 6 mm, manufactured by Toho Tenax Co., Ltd.)

### (5) Azine Dyes

- C-1: Solvent Black 7 (NUBIAN BLACK TH-807, manufactured by Orient Chemical Industries Co., Ltd.)
- C-2: Solvent Black 5 (NUBIAN BLACK NH-815, manufactured by Orient Chemical Industries Co., Ltd.)

### (6) Polyhydric Alcohol

- D-1: Dipentaerythritol (Di-Pentarit, manufactured by Koei Chemical Co., Ltd.)

### (7) Other Polyamides

- E-1: Polyamide 66 (A125J, melting point: 265°C, manufactured by Unitika Ltd.)
- E-2: Polyamide 6 (A1030BRL, melting point: 225°C, manufactured by Unitika Ltd.)

### (8) Antioxidant

- F-1: Bis(2,6-di-tert-butyl-4-methylphenyl)pentaerythritol diphosphite (phosphorus-based antioxidant, Adeka Stab PEP-36, manufactured by Adeka Corp.)

### (9) Semi-Aromatic Polyamides

- Semi-aromatic polyamide (A-1)

In a ribbon blender-type reaction apparatus, 4.70 kg of terephthalic acid (TPA) in a power form as the aromatic dicarboxylic acid component, 0.32 kg of stearic acid (STA) as the monocarboxylic acid component and 9.3 g of sodium hypophosphite monohydrate as the polymerization catalyst were placed, and were heated to 170°C while the resulting mixture was being stirred at a number of rotations of 30 rpm under sealing with nitrogen. Subsequently, while the temperature was being maintained at 170°C and the number of rotations was being maintained at 30 rpm, by using a liquid injection apparatus, 4.98 kg of 1,10-decanediamine (DDA) heated to 100°C was added to the above-described mixture as the aliphatic diamine component, continuously (continuous liquid injection method) over 2.5 hours, and thus a reaction product was obtained. The molar ratio between the raw material monomers was TPA:DDA:STA=48.5:49.6:1.9 (the equivalent ratio between the functional groups of the raw material monomers was TPA:DDA:STA=49.0:50.0:1.0).

Successively, the obtained reaction product was heated in the same reaction apparatus to be polymerized in a flow of nitrogen gas at 250°C, at a number of rotations of 30 rpm for 8 hours, and thus, a powder of a semi-aromatic polyamide was prepared.

Subsequently, the obtained powder of the semi-aromatic polyamide was converted into a strand shape by using a twin screw kneading machine, the strand was made to pass through a water tank to be solidified, and the solidified strand was cut into a pellet with a pelletizer to yield a semi-aromatic polyamide (A-1) pellet.

- Semi-aromatic polyamides (A-2) to (A-7)

The semi-aromatic polyamides (A-2) to (A-7) were obtained in the same manner as in the case of the semi-aromatic polyamide (A-1) except that the types and molar ratios of the monomers constituting the semi-aromatic polyamides were altered as shown in Table 1.

Table 1 shows the values of the properties of the obtained semi-aromatic polyamides.

**[Table 1]**

| | | Constituent monomers | | | | | | Values of properties | | | |
|---|---|---|---|---|---|---|---|---|---|---|---|
| | | Aromatic dicarboxylic acid component | | Aliphatic diamine component | | Monocarboxylic acid component | | Melting point | Relative viscosity | Contents of terminal groups (mmol/kg) | |
| | | Type | mol% | Type | mol% | Type | mol% | °C | | COOH | NH₂ |
| | A-1 | TPA | 48.5 | DDA | 49.6 | STA | 1.9 | 316 | 2.25 | 41 | 4 |
| | A-2 | TPA | 48.5 | ODA | 49.6 | STA | 1.9 | 334 | 2.22 | 38 | 5 |
| Semi-aromatic polyamides | A-3 | TPA/IPA | 46.5/2.0 | DDA | 49.6 | STA | 1.9 | 314 | 2.27 | 40 | 4 |
| | A-4 | TPA | 48.5 | DDA/NDA | 47.3/2.3 | STA | 1.9 | 314 | 2.27 | 45 | 3 |
| | A-5 | TPA | 48.5 | DDA | 49.6 | MYA | 1.9 | 316 | 2.23 | 43 | 4 |
| | A-6 | TPA | 48.5 | DDA | 49.6 | CAA | 1.9 | 315 | 2.26 | 42 | 3 |
| | A-7 | TPA | 49.5 | DDA | 49.6 | BA | 1.9 | 317 | 2.24 | 59 | 2 |

| | | | | | | | | | | | |
|---|---|---|---|---|---|---|---|---|---|---|---|
| TPA: Terephthalic acid, IPA: Isophthalic acid DDA: 1,10-Decanediamine, ODA: 1,8-Octanediamine, NDA: 1,9-Nonanediamine STA: Stearic acid, MYA: Myristic acid, CAA: Capric acid, BA: Benzoic acid | | | | | | | | | | | |

### Example 1

A mixture was prepared by dry blending 100 parts by mass of the semi-aromatic polyamide (A-1), 1 part by mass of the azine dye (C-1) and 0.5 part by mass of the antioxidant (F-1), and the resulting mixture was metered by using the loss-in-weight type continuous metering feeder CE-W-1 (manufactured by Kubota Corp.) and fed for melt kneading to the main feeding port of the same direction twin screw extruder TEM26SS (manufactured by Toshiba Machine Co., Ltd.) having a screw diameter of 26 mm with L/D50. On the way, from the side feeder, 20 parts by mass of the fibrous reinforcing material (B-1) was fed and the resulting mixture was further kneaded. The kneaded mixture was taken out from the die into a strand shape, and then allowed to pass through a water tank to be cooled and solidified; the solidified product was cut with a pelletizer to yield a semi-aromatic polyamide resin composition pellet. The cylinder temperature of the extruder was set at (Tm + 15°C), the screw rotation number was set at 250 rpm, and the discharge rate was set at 25 kg/hour.

Examples 2 to 30 and Comparative Examples 1 to 10

In each of Examples 2 to 30 and Comparative Examples 1 to 10, a semi-aromatic polyamide resin composition pellet was obtained by performing the same operations as in Example 1 except that the composition of the semi-aromatic polyamide resin composition was altered as shown in Table 2 or Table 3.

By using the obtained semi-aromatic polyamide resin composition pellets, the various evaluation tests were performed. The results thus obtained are shown in Tables 2 and 3.

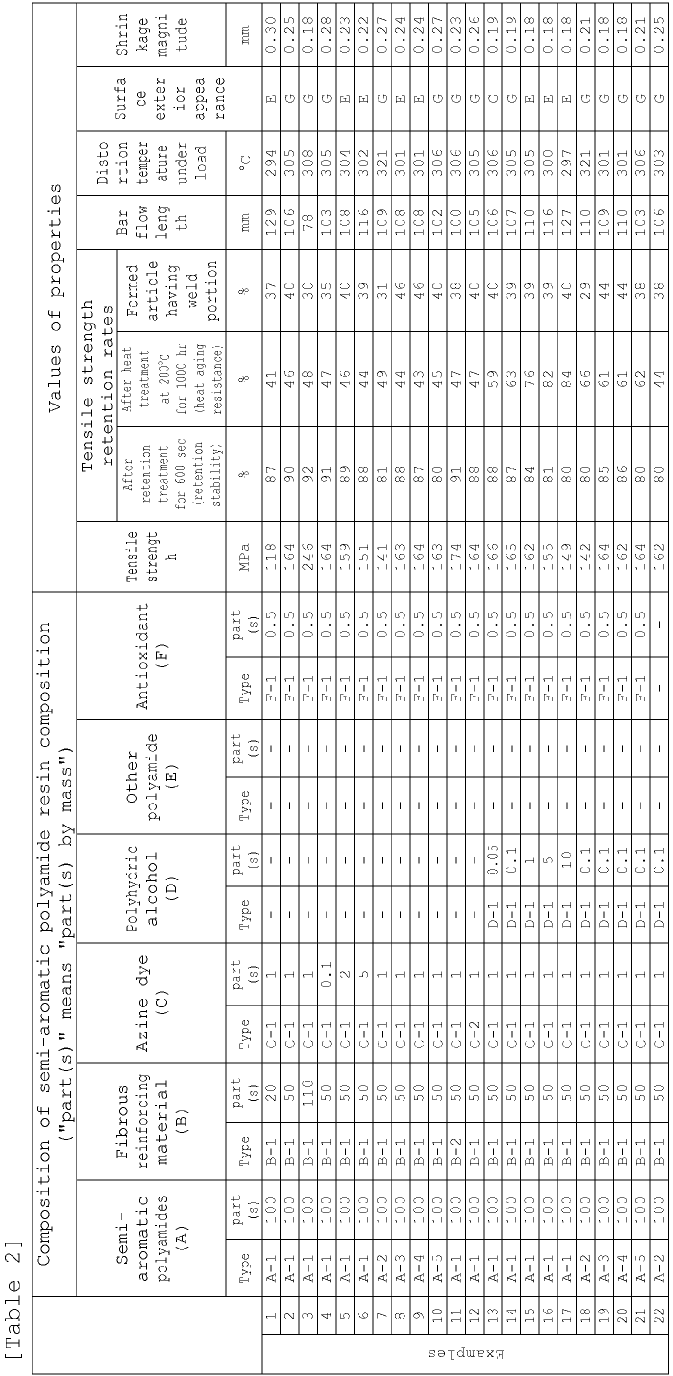

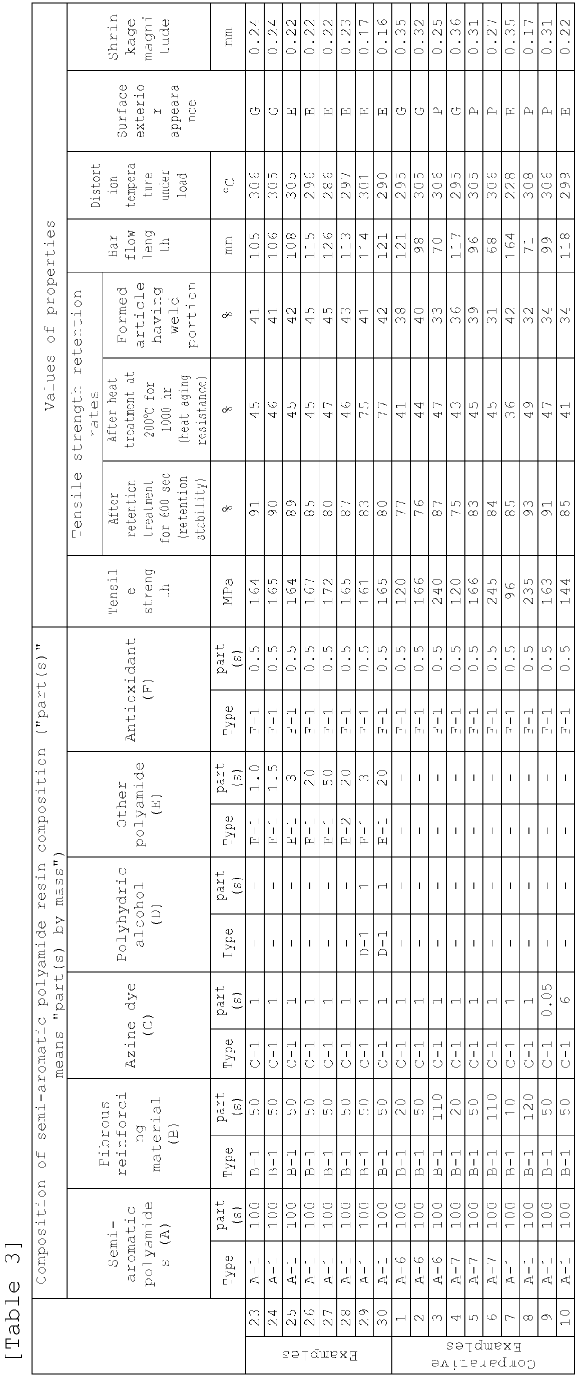

The resin compositions of Examples 1 to 30 met the requirements of the present invention, and hence were high in the tensile strength retention rate after the retention treatment for 600 seconds and excellent in retention stability, and at the same time, long in the bar flow length; in Examples 1 to 30, the obtained formed articles were all high in the distortion temperature under load, excellent in heat resistance, high in the tensile strength retention rate after the heat treatment at 200°C for 1000 hours, excellent in heat aging resistance, high in tensile strength and excellent in mechanical properties, also excellent in surface exterior appearance, low in shrinkage magnitude and excellent in forming processability.

As compared with the resin composition of Example 2 using 1,10-decanediamine (DDA) as the aliphatic diamine component of the semi-aromatic polyamide, the resin composition of Example 7 using 1,8-octanediamine (ODA) as the aliphatic diamine component of the semi-aromatic polyamide yielded a formed article higher in distortion temperature under load.

In Examples 2 and 4 to 6, the resin compositions larger in the content of the azine dye (C) allowed the obtained formed articles to be improved in the surface exterior appearance and to be decreased in the shrinkage magnitude.

In Examples 2 and 13 to 17, the resin compositions larger in the content of the polyhydric alcohol (D) resulted in the increase of the bar flow length, and allowed the obtained formed articles to be improved in surface exterior appearance, to be drastically reduced in the shrinkage magnitude while the decrease of the tensile strength was being suppressed, and to be excellent in heat aging resistance.

In Examples 2 and 23 to 27, the resin compositions larger in the content of the aliphatic polyamide as the other polyamide (E) resulted in the increase of the bar flow length, and allowed the obtained formed articles to be improved in the surface exterior appearance, to be higher in the weld strength and to be reduced in the shrinkage magnitude.

As can be seen from a comparison among Examples 15, 25 and 29, and from a comparison among Examples 15, 26 and 30, the resin compositions including both of the polyhydric alcohol (D) and an aliphatic polyamide as the other polyamide (E) more improved the bar flow length and more reduced the shrinkage magnitude of the formed articles than the resin compositions including one of the polyhydric alcohol (D) and the aliphatic polyamide as the other polyamide (E).

The resin compositions of Comparative Examples 1 to 3 used a semi-aromatic polyamide including an aliphatic monocarboxylic acid having a molecular weight of less than 200 as the monocarboxylic acid component, and hence were lower in retention stability than the resin compositions of Examples 1 to 3.

The resin compositions of Comparative Examples 4 to 6 used a semi-aromatic polyamide including an aromatic monocarboxylic acid having a molecular weight of less than 200 as the monocarboxylic acid component, and hence were lower in retention stability than the resin compositions of Examples 1 to 3.

The resin composition of Comparative Example 7 was small in the content of the fibrous reinforcing material (B), and hence resulted in a low tensile strength of the formed article; in Comparative Example 8, the content of the fibrous reinforcing material (B) was large, and hence the surface exterior appearance of the formed article was poor.

The resin composition of Comparative Example 9 was small in the content of the azine dye (C), and hence the surface exterior appearance of the formed article was poor; in Comparative Example 10, the content of the azine dye (C) was large, and hence the tensile strength of the formed article was low.

## Claims

1. A semi-aromatic polyamide resin composition comprising 100 parts by mass of a semi-aromatic polyamide (A), 20 to 110 parts by mass of a fibrous reinforcing material (B) and 0.1 to 5 parts by mass of an azine dye (C),
wherein the semi-aromatic polyamide (A) includes as constituent components thereof an aromatic dicarboxylic acid component, an aliphatic diamine component and a monocarboxylic acid component, and has a melting point of 300°C or higher; and
the monocarboxylic acid component constituting the semi-aromatic polyamide (A) is an aliphatic monocarboxylic acid having a molecular weight of 200 or more.

2. The semi-aromatic polyamide resin composition according to claim 1, further comprising 0.05 to 10 parts by mass of a polyhydric alcohol (D).

3. The semi-aromatic polyamide resin composition according to claim 1 or 2, further comprising 1 to 50 parts by mass of a polyamide (E) other than the semi-aromatic polyamide (A).

4. A formed article obtained by forming the semi-aromatic polyamide resin composition according to any one of claims 1 to 3.
